(19) Europäisches Patentamt
European Patent Office
Office européen des brevets

(11) **EP 3 610 543 B1**

(12) **EUROPÄISCHE PATENTSCHRIFT**

(45) Veröffentlichungstag und Bekanntmachung des Hinweises auf die Patenterteilung:
**11.05.2022   Patentblatt 2022/19**

(21) Anmeldenummer: **18713843.3**

(22) Anmeldetag: **21.03.2018**

(51) Internationale Patentklassifikation (IPC):
*H02H 5/04* (2006.01)     *H01R 13/713* (2006.01)
*G01K 7/08* (2006.01)     *H01R 13/66* (2006.01)

(52) Gemeinsame Patentklassifikation (CPC):
**H02H 5/046; G01K 7/08; H01R 13/6683; H01R 13/7137**

(86) Internationale Anmeldenummer:
**PCT/EP2018/057109**

(87) Internationale Veröffentlichungsnummer:
**WO 2018/188917 (18.10.2018 Gazette 2018/42)**

(54) **GERÄT MIT EINER TEMPERATURÜBERWACHTEN STECKVERBINDUNG**

DEVICE COMPRISING A PLUG-IN CONNECTION OF WHICH THE TEMPERATURE IS MONITORED

APPAREIL À CONNEXION ENFICHABLE SURVEILLÉE EN TEMPÉRATURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.04.2017   DE 102017206094**

(43) Veröffentlichungstag der Anmeldung:
**19.02.2020   Patentblatt 2020/08**

(73) Patentinhaber: **BSH Hausgeräte GmbH**
**81739 München (DE)**

(72) Erfinder:
- **KÖPPL, Magnus**
  **93093 Donaustauf (DE)**
- **HELMSCHMIDT, Holger**
  **93049 Regensburg (DE)**
- **PLECHER, Claus**
  **93197 Zeitlarn (DE)**

(56) Entgegenhaltungen:
WO-A1-2006/109330     WO-A2-2015/113666
DE-A1-102015 206 840

**Beschreibung**

Die Erfindung betrifft ein Gerät, insbesondere ein Hausgerät, mit einer temperaturüberwachten Steckverbindung, insbesondere einer Steckverbindung zu einem Netzkabel.

Ein Hausgerät, insbesondere ein Haushaltsgerät wie z.B. eine Waschmaschine, eine Spülmaschine, ein Wäschetrockner, etc., wird typischerweise über ein Netzkabel an ein elektrisches Versorgungsnetz angeschlossen, um das Hausgerät mit elektrischer Energie zu versorgen. Das Netzkabel umfasst dabei eine netzseitige Schnittstelleneinheit (insbesondere einen Netzstecker), mit dem das Netzkabel in eine Netzschnittstelle (insbesondere in eine Steckdose) gesteckt wird. Des Weiteren kann das Netzkabel eine geräteseitige Schnittstelleneinheit umfassen, mit dem das Netzkabel mit einer Geräteschnittstelle (insbesondere mit einem Stecker des Hausgeräts) verbunden wird.

Die geräteseitige Schnittstelleneinheit und die Geräteschnittstelle bilden typischerweise ein Stecksystem, wobei die Steckverbindung zwischen geräteseitiger Schnittstelleneinheit und Geräteschnittstelle durch einen Nutzer eines Hausgeräts hergestellt werden kann. Dabei kann es vorkommen, dass ein Nutzer die Steckverbindung nur unzureichend herstellt. Des Weiteren kann es vorkommen, dass aufgrund von Alterung und/oder Abnutzung die Qualität der Steckverbindung zwischen geräteseitiger Schnittstelleneinheit und Geräteschnittstelle unzureichend ist. Die Steckverbindung kann somit einen relativ hohen Übergangswiderstand aufweisen, so dass es bei Leistungsübertragung über die Steckverbindung zu einer Erhöhung der Temperatur der Steckverbindung kommen kann. WO 2015/113666 A2 beschreibt eine elektrische Verbindungsvorrichtung und ein Ladekabel für ein Elektrofahrzeug. WO 2006/109330 A1 beschreibt ein Verfahren zum Schutz eines Verbindungselements. DE 10 2015 206840 A1 beschreibt eine thermisch überwachte Ladevorrichtung.

Das vorliegende Dokument befasst sich mit der technischen Aufgabe, ein Gerät, insbesondere ein Hausgerät, und ein System mit einem Gerät und einem Netzkabel bereitzustellen, mit denen die Temperatur einer Steckverbindung zwischen dem Gerät und dem Netzkabel zuverlässig und präzise überwacht werden kann.

Die Aufgabe wird durch den Gegenstand des unabhängigen Patentanspruchs gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird ein Gerät, insbesondere ein Hausgerät bzw. ein Haushaltsgerät, beschrieben, das eine Geräteschnittstelle zum Anschluss eines Netzkabels sowie eine Steuereinheit umfasst. Das Gerät, insbesondere das Hausgerät, kann ausgebildet sein, um in einem Haushalt (insbesondere in einer Küche) durch einen Nutzer genutzt zu werden.

Beispielhafte Hausgeräte sind Küchengeräte, wie z.B. ein Kühlschrank, eine Waschmaschine, eine Kaffeemaschine, ein Mixer, eine Küchenmaschine, etc.

Die Geräteschnittstelle ist eingerichtet, um mit einer geräteseitigen Schnittstelleneinheit des Netzkabels eine Steckverbindung zu bilden. Insbesondere können ein oder mehrere Leistungs-Kontaktteile der geräteseitigen Schnittstelleneinheit mit komplementären ein oder mehreren Leistungs-Kontaktteilen der Geräteschnittstelle Steckverbindungen bilden. Dabei kann bevorzugt ein Leistungs-Kontaktteil der geräteseitigen Schnittstelleneinheit des Netzkabels eine Buchse umfassen, in die ein Stift der Geräteschnittstelle des Geräts gesteckt werden kann, um eine Leistungsverbindung zu bilden. Insbesondere kann die Geräteschnittstelle des Geräts als Stecker ausgebildet sein, der in eine als Steckdose ausgebildete geräteseitige Schnittstelleneinheit des Netzkabels gesteckt werden kann.

Die Geräteschnittstelle des Geräts umfasst somit ein oder mehrere Leistungs-Kontaktteile, die eingerichtet sind, mit ein oder mehreren Leistungs-Kontaktteilen der geräteseitigen Schnittstelleneinheit des Netzkabels jeweils (paarweise) Leistungsverbindungen zu bilden, um das Hausgerät mit elektrischer Energie aus einem elektrischen Versorgungsnetz (z.B. aus einem 230V oder einem 130V Netz) zu versorgen. Zu diesem Zweck kann das Netzkabel über eine netzseitige Schnittstelleneinheit (z.B. über einen Netzstecker) mit dem Versorgungsnetz (z.B. mit einer Steckdose des Versorgungsnetzes) verbunden werden. Dabei ist die netzseitige Schnittstelleneinheit typischerweise standardisiert (z.B. Stecker-Typ F (CEE 7/4)). Beispielhafte Leistungsverbindungen können für einen Neutralleiter und/oder für einen Phasenleiter bereitgestellt werden.

Die Geräteschnittstelle, insbesondere das Leistungs-Kontaktteil der Geräteschnittstelle für zumindest eine der Leistungsverbindungen (z.B. für einen Neutralleiter oder für einen Phasenleiter), umfasst ein erstes thermoelektrisches Element. Das erste thermoelektrische Element umfasst dabei ein erstes Material bzw. besteht (ggf. vollständig) aus einem ersten Material. Das erste Material ist bevorzugt ein Metall. Des Weiteren weist das erste Material einen ersten thermoelektrischen Koeffizienten auf. Beispielsweise kann das erste Material Eisen (Fe) umfassen bzw. sein.

Das erste thermoelektrische Element ist eingerichtet, bei Vorliegen der Leistungsverbindung ein zweites thermoelektrisches Element an der geräteseitigen Schnittstelleneinheit, insbesondere an dem Leistungs-Kontaktteil der geräteseitigen Schnittstelleneinheit, zu kontaktieren. Das zweite thermoelektrische Element umfasst dabei ein zweites Material bzw. besteht (ggf. vollständig) aus einem zweiten Material. Das zweite Material umfasst bevorzugt ein Metall. Das zweite Material unterscheidet sich dabei von dem ersten Material. Insbesondere weist das zweite Material typischerweise einen zweiten thermoelektrischen Koeffizienten auf, der sich von dem ersten thermoelektrischen Koeffizienten des ersten Materials unterscheidet. Beispielsweise kann das zweite Material Kupfer-Nickel (CuNi) umfassen bzw. sein.

Das erste thermoelektrische Element ist, z.B. über eine erste Leistung, elektrisch leitend mit einem ersten Messeingang der Steuereinheit gekoppelt. Der erste Messeingang kann dabei einen Analog-Digital-Wandler umfassen, um digitale Messdaten in Bezug auf ein erstes Potential an dem ersten Messeingang zu generieren. Über den ersten Messeingang kann somit eine galvanische Trennung zu dem Leistungs-Kontaktteil der Geräteschnittstelle bewirkt werden.

Die Geräteschnittstelle umfasst ein Mess-Kontaktteil, das eingerichtet ist, mit einem Mess-Kontaktteil der geräteseitigen Schnittstelleneinheit eine elektrisch leitende Messverbindung (insbesondere eine Steckverbindung) zwischen dem zweiten thermoelektrischen Element und einem zweiten Messeingang der Steuereinheit zu bilden. Somit kann über eine Messverbindung ein zweites Potential an einem zweiten Messeingang der Steuereinheit bereitgestellt werden. Der zweite Messeingang kann einen Analog-Digital-Wandler umfassen, um digitale Messdaten in Bezug auf das zweite Potential am zweiten Messeingang bereitzustellen. Über den zweiten Messeingang kann somit eine galvanische Trennung zu dem Leistungs-Kontaktteil der geräteseitigen Schnittstelleinheit bewirkt werden.

Die Steuereinheit ist somit eingerichtet, Messdaten in Bezug auf eine Mess-Spannung bzw. eine Potentialdifferenz zwischen dem ersten und dem zweiten Messeingang zu ermitteln. Aufgrund der Verwendung von unterschiedlichen thermoelektrischen Elementen an einer Leistungsverbindung an der Geräteschnittstelle zeigt die Mess-Spannung Temperatur-Information in Bezug auf die Temperatur an der Leistungsverbindung an. Die Verwendung von thermoelektrischen Elementen ermöglicht es dabei, die Temperatur in unmittelbarer Nähe der Leistungsverbindung zu erfassen. Es wird somit eine präzise Ermittlung von Temperatur-Information ermöglicht.

Das erste thermoelektrische Element kann über eine erste Leitung mit dem ersten Messeingang der Steuereinheit elektrisch leitend verbunden sein. Dabei können sowohl das erste thermoelektrische Element als auch die erste Leitung das erste Material umfassen bzw. (ggf. vollständig) aus dem ersten Material bestehen. In entsprechender Weise kann das Mess-Kontaktteil der Geräteschnittstelle über eine zweite Leitung mit dem zweiten Messeingang der Steuereinheit elektrisch leitend verbunden sein. Dabei können sowohl das Mess-Kontaktteil der Geräteschnittstelle als auch die zweite Leitung das zweite Material umfassen bzw. (ggf. vollständig) aus dem zweiten Material bestehen. So kann in präziser Weise eine Mess-Spannung an den Messeingängen der Steuereinheit bereitgestellt werden, wobei die Mess-Spannung Information in Bezug auf die Temperatur an den miteinander in Kontakt stehenden thermoelektrischen Elementen anzeigt.

Die Steuereinheit kann eingerichtet sein, in Abhängigkeit von den Messdaten (zumindest) eine Maßnahme in Bezug auf die ein oder mehreren Leistungsverbindungen des Geräts, insbesondere in Bezug auf die Temperatur bzw. die Wärmeentwicklung an den ein oder mehreren Leistungsverbindungen, zu veranlassen. Beispielhafte Maßnahmen sind dabei: das Ausgeben eines Hinweises in Bezug auf die Temperatur der ein oder mehreren Leistungsverbindungen über eine Ausgabeeinheit (z.B. auf einem Bildschirm) des Geräts; das Reduzieren einer Leistungsaufnahme des Geräts über die ein oder mehreren Leistungsverbindungen; und/oder das Überführen des Geräts in einen sicheren Betriebszustand.

Das Gerät kann somit eingerichtet sein, die Temperatur der Steckverbindung zu einem Netzkabel zu überwachen und bei Bedarf ein oder mehrere Gegenmaßnahmen einzuleiten. So können die Sicherheit, die Zuverlässigkeit und der Komfort eines Geräts weiter erhöht werden.

Gemäß einem weiteren Aspekt der Erfindung wird ein System mit einem Gerät, insbesondere einem Hausgerät, und einem Netzkabel beschrieben. Dabei kann das Gerät wie in diesem Dokument beschrieben ausgebildet sein. Das Netzkabel umfasst eine geräteseitige Schnittstelleneinheit, die über Leitungen mit einer netzseitigen Schnittstelleneinheit zum Anschluss des Netzkabels an ein elektrisches Versorgungsnetz verbunden ist. Das Gerät kann somit über das Netzkabel an das elektrische Versorgungsnetz angeschlossen werden. Zu diesem Zweck umfasst die geräteseitige Schnittstelleneinheit des Netzkabels Leitungs-Kontaktteile, die eingerichtet sind, mit Leistungs-Kontaktteilen der Geräteschnittstelle Leistungsverbindungen zu bilden.

Die geräteseitige Schnittstelleneinheit und die Geräteschnittstelle umfassen Mittel (insbesondere ein oder mehrere Thermoelemente), mit denen Temperatur-Information in Bezug auf die Temperatur bzw. die Wärmeentwicklung der Steckverbindung zwischen der geräteseitigen Schnittstelleneinheit und der Geräteschnittstelle erfasst werden kann.

Insbesondere umfasst die geräteseitige Schnittstelleneinheit ein zweites thermoelektrisches Element (aus einem zweiten Material), das eingerichtet ist, bei Vorliegen einer Leistungsverbindung zwischen den entsprechenden Leistungs-Kontaktteilen der geräteseitigen Schnittstelleneinheit und der Geräteschnittstelle das erste thermoelektrische Element (aus einem ersten Material) der Geräteschnittstelle zu kontaktieren.

Des Weiteren kann die geräteseitige Schnittstelleneinheit ein Mess-Kontaktteil (insbesondere aus dem zweiten Material) umfassen, das mit dem zweiten thermoelektrischen Element gekoppelt ist und das eingerichtet ist, mit dem Mess-Kontaktteil der Geräteschnittstelle die Messverbindung zu bilden.

Das System kann somit eine erste elektrisch leitende Verbindung aus dem ersten Material von dem ersten thermoelektrischen Element bis zu dem ersten Messeingang umfassen. Des Weiteren kann das System eine zweite elektrisch leitende Verbindung aus dem zweiten Material von dem zweiten thermoelektrischen Element über die Messverbindung bis zu dem zweiten Messeingang umfassen. Es kann somit (für ein oder mehrere der Leistungsverbindungen jeweils) ein Thermoelement bereitgestellt werden, das ausgebildet ist, die Temperatur in unmittelbare Nähe einer Leistungsverbindung zu erfassen. Das erste thermoelektrische Element und das zweite thermoelektrische Element können zu diesem Zweck in einem Teilbereich einer Leistungsverbindung zwischen den Leistungs-Kontaktteilen eine direkte Kontaktstelle zueinander aufweisen.

Die geräteseitige Schnittstelleneinheit kann eine Feder umfassen, an der das zweite thermoelektrische Element angeordnet ist. Die Feder kann dabei elektrisch von dem Leistungs-Kontaktteil der geräteseitigen Schnittstelleneinheit getrennt, insbesondere elektrisch isoliert, sein. Das erste thermoelektrische Element kann an einer der Feder der geräteseitigen Schnittstelleneinheit zugewandten Seite des Leistungs-Kontaktteils der Geräteschnittstelle angeordnet sein (und ggf. mit dem Leistungs-Kontaktteil der Geräteschnittstelle in elektrischem Kontakt stehen). Beispielsweise können das erste thermoelektrische Element und/oder das zweite thermoelektrische Element als Beschichtung des jeweiligen Leistungs-Kontaktteils bereitgestellt werden, wobei sich die Beschichtungen der beiden Leistungs-Kontaktteile in einem bestimmten Teilbereich der Leistungsverbindung berühren können.

Es ist zu beachten, dass jegliche Aspekte des in diesem Dokument beschriebenen Geräts und/oder Systems in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen

Figur 1      ein Blockdiagramm eines Hausgeräts und eines Netzkabels;

Figur 2      ein beispielhaftes Stecksystem mit Mitteln zur Ermittlung von Information in Bezug auf eine Temperatur von Kontaktteilen des Stecksystems; und

Figur 3      eine beispielhafte Steckverbindung mit einer Temperaturüberwachung.

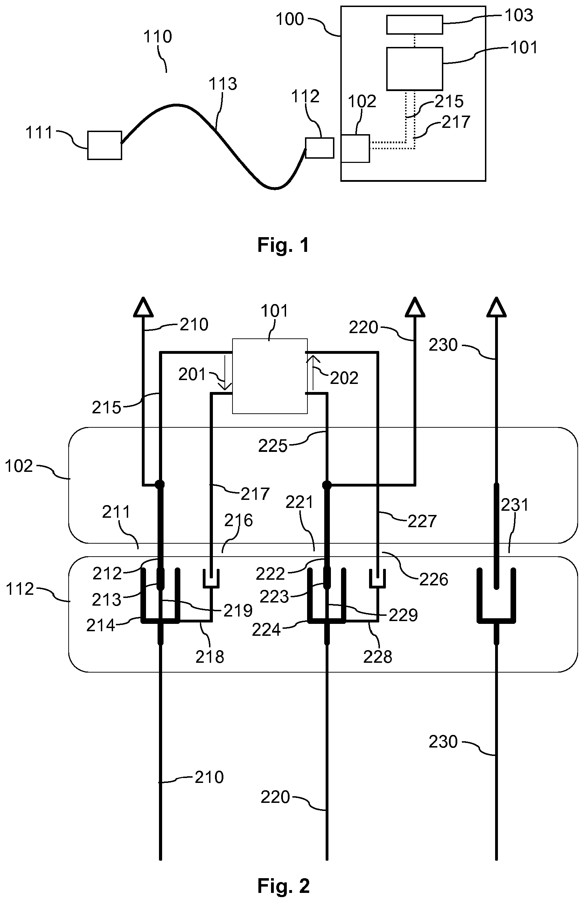

Wie eingangs dargelegt, befasst sich das vorliegende Dokument mit der zuverlässigen und präzisen Überwachung der Temperatur einer Steckverbindung zwischen einem Netzkabel und einem elektrischen Gerät, insbesondere einem Hausgerät. Fig. 1 zeigt ein Gerät 100, insbesondere ein Hausgerät, das über eine Geräteschnittstelle 102 (z.B. einen Stecker) mit der geräteseitigen Schnittstelleneinheit 112 (z.B. einer Buchse) eines Netzkabels 110 verbunden werden kann. Das Netzkabel 110 umfasst elektrische Leitungen 113, die die geräteseitige Schnittstelleneinheit 112 mit einer netzseitigen Schnittstelleneinheit 111 verbindet. Das Gerät 100 umfasst eine Steuereinheit 101, die eingerichtet ist, Information in Bezug auf eine Steckverbindung zwischen geräteseitiger Schnittstelleneinheit 112 und Geräteschnittstelle 102 von der Geräteschnittstelle 102 zu empfangen (über ein oder mehrere Leitungen 215, 217). Die Steuereinheit 101 ist weiter eingerichtet, das Gerät 100 in Abhängigkeit von der empfangenen Information zu steuern. Beispielsweise kann über eine Ausgabeeinheit 103 des Hausgeräts 100 ein optisches und/oder ein akustisches Signal ausgeben werden, um einen Nutzer des Geräts 100 über die Temperatur der Steckverbindung zu informieren.

Die Steckverbindung zwischen der geräteseitigen Schnittstelleneinheit 112 und der Geräteschnittstelle 102 kann Mittel umfassen, mit denen die Temperatur der Steckverbindung ermittelt und angezeigt werden kann. Fig. 2 zeigt Details einer beispielhaften Steckverbindung zwischen einem Gerät 100 und einem Netzkabel 110. Die Steckverbindung ist eingerichtet, mehrere Leistungsverbindungen 211, 221, 231 herzustellen, um elektrische Energie für die Energieversorgung des Geräts 100 zu übertragen. Insbesondere kann eine Leistungsverbindung 211 für einen Neutralleiter N 210, eine Leistungsverbindung 221 für einen Phasenleiter 220 und eine Leistungsverbindung 231 für einen Schutzleiter 230 hergestellt werden. Die Geräteschnittstelle 102 und die geräteseitige Schnittstelleneinheit 112 umfassen dazu jeweils Kontaktteile. In dem dargestellten Beispiel umfasst die Geräteschnittstelle 102 Pins bzw. Stifte bzw. Messer 212, 222, die in entsprechende Buchsen 214, 224 der geräteseitigen Schnittstelleneinheit 112 gesteckt werden können, um die jeweiligen Leistungsverbindungen 211, 221 herzustellen. Allgemein werden die Pins bzw. Stifte bzw. Messer 212, 222 und Buchsen 214, 224 zur Herstellung einer Leistungsverbindung 211, 221 in diesem Dokument als Leistungs-Kontaktteile bezeichnet.

Aufgrund einer unzureichenden elektrischen Kontaktierung der Kontaktteile einer Leistungsverbindung 211, 221 kann es zu einem erhöhten Übergangswiderstand und damit zu einer substantiellen Temperaturerhöhung an den Kontaktteilen kommen. Die in Fig. 2 dargestellte Steckverbindung umfasst Mittel, um die Temperatur einer Leistungsverbindung 211, 221 in präziser Weise zu erfassen. Insbesondere umfasst das Leistungs-Kontaktteil 212, 222 der Geräteschnittstelle 102 ein erstes thermoelektrisches Element 213, 223 und die geräteseitige Schnittstelleneinheit 112 (insbesondere das Leistungs-Kontaktteil 214, 224 der geräteseitigen Schnittstelleneinheit 112) umfasst ein zweites thermoelektrisches Element 219, 229, die an der Leistungsverbindung 211, 221 bzw. in unmittelbarer Nähe zu der Leistungsverbindung 211, 221 in Kontakt zueinander stehen, so dass aufgrund der Kontaktstelle zwischen dem ersten thermoelektrischen Element 213, 223 und dem zweiten thermoelektrischen Element 219, 229 eine elektrische Spannung entsteht, wobei die Höhe der elektrischen Spannung von der Temperatur an der Kontaktstelle zwischen dem ersten thermoelektrischen Element 213, 223 und dem zweiten thermoelektrischen Element 219, 229 abhängt.

Das erste thermoelektrische Element 213, 223 ist über eine erste Leitung 215, 225 mit einem ersten Messeingang der Steuereinheit 101 gekoppelt. Des Weiteren ist das zweite thermoelektrische Element 219, 229 über eine zweite Leitung 218 228 innerhalb der geräteseitigen Schnittstelleneinheit 112, über eine zweite Leitung 217, 227 innerhalb der Geräteschnittstelle 102 und über eine Signalverbindung 216, 226 zwischen den zweiten Leitungen der geräteseitigen Schnittstelleneinheit 112 und der Geräteschnittstelle 102 mit einem zweiten Messeingang der Steuereinheit 101 gekoppelt. So kann an der Steuereinheit 101 eine Mess-Spannung 201, 202 zwischen dem ersten Messeingang und dem zweiten Messeingang erfasst werden, die die Temperatur der Kontaktstelle zwischen dem ersten thermoelektrischen Element 213, 223 und dem zweiten thermoelektrischen Element 219, 229 anzeigt.

Das erste thermoelektrische Element 213, 223 und das zweite thermoelektrische Element 219, 229 umfassen unterschiedliche Materialien, insbesondere unterschiedliche Metalle, wobei die unterschiedlichen Materialien unterschiedliche thermoelektrische Koeffizienten $k_1$ bzw. $k_2$ aufweisen. Die Mess-Temperator $T_M$ an der Kontaktstelle unterscheidet sich typischerweise von einer Referenz-Temperatur $T_R$, wobei die Referenz-Temperatur z.B. die Temperatur an den Messeingängen der Steuereinheit 101 sein kann. Die Mess-Spannung $U_M$, die an den Messeingängen erfasst wird, ergibt sich dann als

$$U_M=(k_1-k_2)^*(T_M-T_R).$$

Bei Kenntnis der thermoelektrischen Koeffizienten und der Referenz-Temperatur kann somit auf Basis der Mess-Spannung in präziser Weise die Temperatur direkt an einer Leistungsverbindung 211, 221 erfasst werden. Zu diesem Zweck werden das erste thermoelektrische Element 213, 223 und die erste Leistung 215, 225 aus dem ersten Material mit dem ersten thermoelektrischen Koeffizienten $k_1$ gebildet. Des Weiteren werden zu diesem Zweck das zweite thermoelektrische Element 219, 229, die zweiten Leistungen 218, 228 bzw. 217, 227 und die Signalverbindung 216, 226 aus dem zweiten Material mit dem zweiten thermoelektrischen Koeffizienten $k_2$ gebildet.

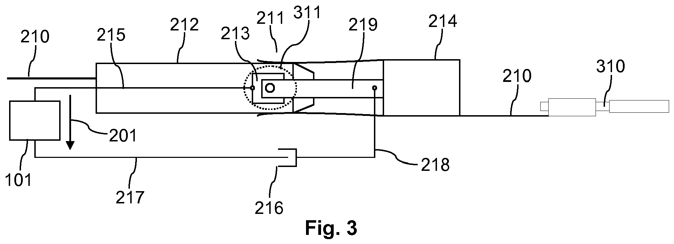

Das erste thermoelektrische Element 213, 223 kann in das Leistungs-Kontaktteil 212, 222 der Geräteschnittstelle 102 integriert sein. Beispielsweise kann das erste thermoelektrische Element 213, wie in Fig. 3 dargestellt, z.B. bereichsweise auf zumindest einem Leistungs-Kontaktteil 212 der Geräteschnittstelle 102 angeordnet sein. In entsprechender Weise kann auch das zweite thermoelektrische Element 219, 229 zumindest bereichsweise auf einem Leistungs-Kontaktteil 214, 224 der geräteseitigen Schnittstelleneinheit 112 angeordnet sein. Die Kontaktstelle 311 zwischen dem ersten thermoelektrischen Element 213, 223 und dem zweiten thermoelektrischen Element 219, 229 kann dann in einem bestimmten Teilbereich der Leistungsverbindung 211 liegen. Fig. 3 zeigt weiter eine beispielhafte Leitung 310 des Netzkabels 110.

Es wird somit eine Steckverbindung mit einer Mehrzahl von Leistungsverbindungen 211, 221 beschrieben, wobei zumindest eine Leistungsverbindung 211, 221 ein Thermoelement zur Ermittlung von Temperaturinformation in Bezug auf die Temperatur der Leistungsverbindung 211, 221 aufweist. Das Thermoelement für eine Leistungsverbindung 211 umfasst dabei zwei unterschiedliche thermoelektrische Elemente 213, 219, die, z.B. in einem Teilbereich der Leistungsverbindung 211, eine Kontaktstelle 311 zueinander bilden. Die thermoelektrische Spannung (d.h. die Messspannung 201, 202) kann über die Messeingänge einer Steuereinheit 101 (z.B. eines Mikrocontrollers) erfasst werden. Es können dann von der Steuereinheit 101 in Abhängigkeit von der Messspannung 201, 202 ein oder mehrere Maßnahmen zur Temperaturreduzierung eingeleitet werden.

Das erste thermoelektrische Element 213 umfasst ein erstes Material (z.B. Eisen, Fe) mit einem ersten thermoelektrischen Koeffizienten. Des Weiteren ist das erste thermoelektrische Element 213 über eine erste Leitung 215 mit dem ersten Messeingang der Steuereinheit 101 gekoppelt, wobei die erste Leitung 215 ebenfalls das erste Material umfasst. Das zweite thermoelektrische Element 219 ist über die zweiten Leitungen 217, 218 und über eine Steckverbindung 216 (zur Kopplung der zweiten Leitungen 217, 218) mit dem zweiten Messeingang der Steuereinheit 101 gekoppelt, wobei dabei jeweils das zweite Material (z.B. Kupfer-Nickel, CuNi) mit dem zweiten thermoelektrischen Koeffizienten verwendet wird.

Mit den in diesem Dokument beschriebenen Maßnahmen kann die Temperatur einer Steckverbindung an einem Hausgerät in zuverlässiger und präziser Weise überwacht werden. Dabei kann die Messung der Temperatur direkt an einer Leistungsverbindung 211, d.h. direkt an den Kontaktteilen 212, 214 einer Leistungsverbindung 211, erfolgen. Die Temperaturmessung kann dabei während des Betriebs eines Geräts 100 erfolgen. So kann eine übermäßige Erwärmung der Steckverbindung verhindert werden. Die beschriebenen Maßnahmen weisen eine galvanische Trennung zu der Geräteenergieversorgung auf und sind somit in sicherer Weise umsetzbar. Das Vorliegen einer erhöhten Temperatur der Steckverbindung kann einem Nutzer an einer Ausgabeeinheit 103 des Geräts 100 angezeigt werden, so dass der Nutzer geeignete Gegenmaßnahmen ergreifen kann. Des Weiteren können zeitnah automatisch Maßnahmen im Gerät 100 umgesetzt werden, um das Gerät 100 in einem sicheren Betriebszustand zu überführen.

Die vorliegende Erfindung ist nicht auf die gezeigten Ausführungsbeispiele beschränkt. Insbesondere ist zu beachten, dass die Beschreibung und die Figuren nur das Prinzip des vorgeschlagenen Geräts und/oder Systems veranschaulichen sollen.

**Patentansprüche**

1. Gerät (100), das eine Geräteschnittstelle (102) zum Anschluss eines Netzkabels (110) und eine Steuereinheit (101) umfasst; wobei

   - die Geräteschnittstelle (102) eingerichtet ist, mit einer geräteseitigen Schnittstelleneinheit (112) des Netzkabels (110) eine Steckverbindung zu bilden;
   - die Geräteschnittstelle (102) zumindest ein Leistungs-Kontaktteil (212) umfasst, das eingerichtet ist, mit einem Leistungs-Kontaktteil (214) der geräteseitigen Schnittstelleneinheit (112) eine Leistungsverbindung (211) zu bilden, um das Gerät (100) mit elektrischer Energie aus einem elektrischen Versorgungsnetz zu versorgen;
   - die Geräteschnittstelle (102) ein erstes thermoelektrisches Element (213) umfasst; **dadurch gekennzeichnet, dass**
   die Geräteschnittstelle dazu eingerichtet ist, bei Vorliegen der Leistungsverbindung (211) ein zweites thermoelektrisches Element (219) der geräteseitigen Schnittstelleneinheit (112), welches sich von dem ersten thermoelektrischen Element (213) unterscheidet, an einer direkten Kontaktstelle (311) zwischen dem ersten thermoelektrischen Element und dem zweiten thermoelektrischen Element zu kontaktieren, so dass das erste thermoelektrische Element (213) und das zweite thermoelektrische Element (219) ein Thermoelement für die Leistungsverbindung (211) bilden;
   - das erste thermoelektrische Element (213) mit einem ersten Messeingang der Steuereinheit (101) gekoppelt ist;
   - die Geräteschnittstelle (102) ein Mess-Kontaktteil umfasst, das eingerichtet ist, mit einem Mess-Kontaktteil der geräteseitigen Schnittstelleneinheit (112) eine Messverbindung (216) zwischen dem zweiten thermoelektrischen Element (219) und einem zweiten Messeingang der Steuereinheit (101) zu bilden; und
   - die Steuereinheit (101) eingerichtet ist, Messdaten in Bezug auf eine Mess-Spannung (201) zwischen dem ersten und dem zweiten Messeingang zu ermitteln.

2. Gerät (100) gemäß Anspruch 1, wobei

   - das erste thermoelektrische Element (213) ein erstes Material mit einem ersten thermoelektrischen Koeffizienten umfasst;
   - das zweite thermoelektrische Element (219) und das Mess-Kontaktteil der Geräteschnittstelle (102) ein zweites Material mit einem zweiten thermoelektrischen Koeffizienten umfassen; und
   - der erste thermoelektrische Koeffizient und der zweite thermoelektrische Koeffizient unterschiedlich sind.

3. Gerät (100) gemäß einem der vorhergehenden Ansprüche, wobei

   - das erste thermoelektrische Element (213) über eine erste Leitung (215) mit dem ersten Messeingang der Steuereinheit (101) verbunden ist; und
   - das erste thermoelektrische Element (213) und die erste Leitung (215) jeweils ein erstes Material umfassen; und/oder
   - das Mess-Kontaktteil der Geräteschnittstelle (102) über eine zweite Leitung (217) mit dem zweiten Messeingang der Steuereinheit (101) verbunden ist; und
   - das Mess-Kontaktteil der Geräteschnittstelle (102) und die zweite Leitung (217) jeweils ein zweites Material umfassen.

4. Gerät (100) gemäß einem der vorhergehenden Ansprüche, wobei die Steuereinheit (101) eingerichtet ist, in Abhängigkeit von den Messdaten eine Maßnahme in Bezug auf die Leistungsverbindung (211), insbesondere in Bezug auf eine Temperatur der Leistungsverbindung (211), zu veranlassen.

5. Gerät (100) gemäß Anspruch 4, wobei die Maßnahme umfasst,

   - Ausgeben eines Hinweises in Bezug auf die Leistungsverbindung (211) über eine Ausgabeeinheit (103) des Geräts (100);
   - Reduzieren einer Leistungsaufnahme des Geräts (100) über die Leistungsverbindung (211); und/oder
   - Überführen des Geräts (100) in einen sicheren Betriebszustand.

6. Gerät (100) gemäß einem der vorhergehenden Ansprüche, wobei das erste thermoelektrische Element (213) an dem Leistungs-Kontaktteil (212) der Geräteschnittstelle (102) angeordnet ist.

7. System mit einem Gerät (100) und einem Netzkabel (110), wobei

   - das Netzkabel (110) eine geräteseitige Schnittstelleneinheit (112) umfasst, die über Leitungen (113, 310) mit einer netzseitigen Schnittstelleneinheit (111) zum Anschluss des Netzkabels (110) an ein elektrisches Versorgungsnetz verbunden ist;

- das Gerät (100) gemäß einem der vorhergehenden Ansprüche ausgebildet ist; und

- die geräteseitige Schnittstelleneinheit (112) des Netzkabels (110) zumindest ein Leistungs-Kontaktteil (214) umfasst, das eingerichtet ist, mit einem Leistungs-Kontaktteil (212) der Geräteschnittstelle (102) eine Leistungsverbindung (211) zu bilden.

8. System gemäß Anspruch 7, wobei

- die geräteseitige Schnittstelleneinheit (112) das zweite thermoelektrische Element (219) umfasst, das eingerichtet ist, bei Vorliegen der Leistungsverbindung (211) das erste thermoelektrische Element (213) an dem Leistungs-Kontaktteil (212) der Geräteschnittstelle (102) zu kontaktieren; und

- die geräteseitige Schnittstelleneinheit (112) das Mess-Kontaktteil umfasst, das mit dem zweiten thermoelektrischen Element (219) gekoppelt ist und das eingerichtet ist, mit dem Mess-Kontaktteil der Geräteschnittstelle (102) die Messverbindung (216) zu bilden.

9. System gemäß einem der Ansprüche 7 bis 8, wobei das erste thermoelektrische Element (213) und das zweite thermoelektrische Element (219) in einem Teilbereich der Leistungsverbindung (211) zwischen den Leistungs-Kontaktteilen (212, 214) eine direkte Kontaktstelle (311) zueinander aufweisen.

10. System gemäß einem der Ansprüche 7 bis 9, wobei,

- das Leistungs-Kontaktteil (212) der Geräteschnittstelle (102) einen Stift umfasst; und

- das Leistungs-Kontaktteil (214) der geräteseitigen Schnittstelleneinheit (112) eine Buchse umfasst, in die der Stift der Geräteschnittstelle (102) gesteckt werden kann.

11. System gemäß einem der Ansprüche 7 bis 10, wobei, das

- die geräteseitige Schnittstelleneinheit (112) eine Feder umfasst, an der das zweite thermoelektrische Element (219) angeordnet ist; und/oder

- das erste thermoelektrische Element (213) an einer der Feder der geräteseitigen Schnittstelleneinheit (112) zugewandten Seite des Leistungs-Kontaktteils (212) der Geräteschnittstelle (102) angeordnet ist.

**Claims**

1. Appliance (100), which comprises an appliance interface (102) for connecting a power cable (110), and comprises a control unit (101); wherein

- the appliance interface (102) is designed to form, with an appliance-side interface unit (112) of the power cable (110), a plug-in connection;

- the appliance interface (102) comprises at least one power contact part (212), which is designed to form, with a power contact part (214) of the appliance-side interface unit (112), a power connection (211), in order to supply the appliance (100) with electrical energy from an electrical supply grid;

- the appliance interface (102) comprises a first thermoelectric element (213); **characterised in that** the appliance interface is designed to make contact, when the power connection (211) exists, with a second thermoelectric element (219) of the appliance-side interface unit (112), which differs from the first thermoelectric element (213), at a direct junction (311) between the first thermoelectric element and the second thermoelectric element, so that the first thermoelectric element (213) and the second thermoelectric element (219) form a thermocouple for the power connection (211);

- the first thermoelectric element (213) is coupled to a first measurement input of the control unit (101);

- the appliance interface (102) comprises a measurement contact part, which is designed to form a measurement connection (216), between the second thermoelectric element (219) and a second measurement input of the control unit (101), with a measurement contact part of the appliance-side interface unit (112); and

- the control unit (101) is designed to determine measurement data relating to a measurement voltage (201) between the first measurement input and the second measurement input.

2. Appliance (100) according to claim 1, wherein

- the first thermoelectric element (213) comprises a first material having a first thermoelectric coefficient;

- the second thermoelectric element (219) and the measurement contact part of the appliance interface (102) comprise a second material having a second thermoelectric coefficient; and

- the first thermoelectric coefficient and the second thermoelectric coefficient are different.

3. Appliance (100) according to one of the preceding claims, wherein

- the first thermoelectric element (213) is connected via a first line (215) to the first measurement input of the control unit (101); and

- the first thermoelectric element (213) and the first line (215) each comprise a first material; and/or

- the measurement contact part of the appliance interface (102) is connected via a second line (217) to the second measurement input of the control unit (101); and

- the measurement contact part of the appliance interface (102) and the second line (217) each comprise a second material.

4. Appliance (100) according to one of the preceding claims, wherein the control unit (101) is designed to initiate, on the basis of the measurement data, a measure relating to the power connection (211), in particular relating to a temperature of the power connection (211).

5. Appliance (100) according to claim 4, wherein the measure comprises

- outputting an indication relating to the power connection (211) via an output unit (103) of the appliance (100);

- reducing a power consumption of the appliance (100) via the power connection (211); and/or

- bringing the appliance (100) into a safe operating state.

6. Appliance (100) according to one of the preceding claims, wherein the first thermoelectric element (213) is arranged on the power contact part (212) of the appliance interface (102).

7. System comprising an appliance (100) and a power cable (110), wherein

- the power cable (110) comprises an appliance-side interface unit (112), which is connected via lines (113, 310) to a grid-side interface unit (111) for connecting the power cable (110) to an electrical supply grid;

- the appliance (100) is designed according to one of the preceding claims; and

- the appliance-side interface unit (112) of the power cable (110) comprises at least one power contact part (214), which is designed to form, with a power contact part (212) of the appliance interface (102), a power connection (211) .

8. System according to claim 7, wherein

- the appliance-side interface unit (112) comprises a second thermoelectric element (219), which is designed to make contact, when the power connection (211) exists, with the first thermoelectric element (213) on the power contact part (212) of the appliance interface (102); and

- the appliance-side interface unit (112) comprises the measurement contact part, which is coupled to the second thermoelectric element (219) and is designed to form the measurement connection (216) with the measurement contact part of the appliance interface (102).

9. System according to one of claims 7 to 8, wherein the first thermoelectric element (213) and the second thermoelectric element (219) have a direct junction (311) between each other in a portion of the power connection (211) between the power contact parts (212, 214).

10. System according to one of claims 7 to 9, wherein

- the power contact part (212) of the appliance interface (102) comprises a pin; and

- the power contact part (212) of the appliance-side interface unit (112) comprises a receptacle, into which can be plugged the pin of the appliance interface (102).

11. System, according to one of claims 7 to 10, wherein

- the appliance-side interface unit (112) comprises a spring, on which is arranged the second thermoelectric element (219); and/or

- the first thermoelectric element (213) is arranged on a side of the power contact part (212) of the appliance interface (102) that faces the spring of the appliance-side interface unit (112).

**Revendications**

1. Appareil (100), qui comprend une interface d'appareil (102) destinée à la connexion d'un câble d'alimentation (110) et une unité de commande (101) ;

- l'interface d'appareil (102) étant agencée pour former une connexion enfichable avec une unité d'interface (112) du câble d'alimentation (110) côté appareil ;

- l'interface d'appareil (102) comprenant au moins une partie de contact de puissance (212) qui est agencée pour former, avec une partie de contact de puissance (214) de l'unité d'interface (112) côté appareil, une connexion de puissance (211) pour alimenter l'appareil (100) en énergie électrique en provenance d'un réseau d'alimentation électrique ;

- l'interface d'appareil (102) comprenant un premier élément thermoélectrique (213) ; **caractérisé en ce que** l'interface d'appareil est agencée pour, en présence de la connexion de puissance (211), contacter un deuxième élément thermoélectrique (219) de l'unité d'interface (112) côté appareil, qui est différent du premier élément thermoélectrique (213), au niveau d'un point de contact (311) direct entre le premier élément thermoélectrique et le deuxième élément thermoélectrique de sorte que le premier élément thermoélectrique (213) et le deuxième élément thermoélectrique (219) forment un thermocouple pour la connexion de puissance (211) ;

- le premier élément thermoélectrique (213) est couplé à une première entrée de mesure de l'unité de commande (101) ;

- l'interface d'appareil (102) comprend une partie de contact de mesure qui est agencée pour former, avec une partie de contact de mesure de l'unité d'interface (112) côté appareil, une connexion de mesure (216) entre le deuxième élément thermoélectrique (219) et une deuxième entrée de mesure de l'unité de commande (101) ; et

- l'unité de commande (101) est agencée pour déterminer des données de mesure concernant une tension de mesure (201) entre la première et la deuxième entrée de mesure.

2. Appareil (100) selon la revendication 1,

- le premier élément thermoélectrique (213) comprenant un premier matériau ayant un premier coefficient thermoélectrique ;

- le deuxième élément thermoélectrique (219) et la partie de contact de mesure de l'interface d'appareil (102) comprenant un deuxième matériau ayant un deuxième coefficient thermoélectrique ; et

- le premier coefficient thermoélectrique et le deuxième coefficient thermoélectrique étant différents.

3. Appareil (100) selon l'une des revendications précédentes,

- le premier élément thermoélectrique (213) étant raccordé à la première entrée de mesure de l'unité de commande (101) par le biais d'une première ligne (215) ; et

- le premier élément thermoélectrique (213) et la première ligne (215) comprenant respectivement un premier matériau ; et/ou

- la partie de contact de mesure de l'interface d'appareil (102) étant raccordée à la deuxième entrée de mesure de l'unité de commande (101) par le biais d'une deuxième ligne (217) ; et

- la partie de contact de mesure de l'interface d'appareil (102) et la deuxième ligne (217) comprenant respectivement un deuxième matériau.

4. Appareil (100) selon l'une des revendications précédentes, l'unité de commande (101) étant agencée pour, en fonction des données de mesure, déclencher une mesure concernant la connexion de puissance (211), en particulier concernant une température de la connexion de puissance (211).

5. Appareil (100) selon la revendication 4, la mesure comprenant

- la délivrance, par le biais d'une unité de délivrance (103) de l'appareil (100), d'une indication concernant la connexion de puissance (211) ;

- la réduction, par le biais de la connexion de puissance (211), d'une puissance absorbée de l'appareil (100) ; et/ou

- le transfert de l'appareil (100) vers un état de fonctionnement sûr.

6. Appareil (100) selon l'une des revendications précédentes, le premier élément thermoélectrique (213) étant disposé au niveau de la partie de contact de puissance (212) de l'interface d'appareil (102).

7. Système avec un appareil (100) et un câble d'alimentation (110),

- le câble d'alimentation (110) comprenant une unité d'interface (112) côté appareil qui est raccordée, par le biais de lignes (113, 310), à une unité d'interface (111) côté réseau pour la connexion du câble d'alimentation (110) à un réseau d'alimentation électrique ;

- l'appareil (100) étant constitué selon l'une des revendications précédentes ; et

- l'unité d'interface (112), côté appareil, du câble d'alimentation (110) comprenant au moins une partie de contact de puissance (214) qui est agencée pour former, avec une partie de contact de puissance (212) de l'interface d'appareil (102), une connexion de puissance (211).

8. Système selon la revendication 7,

- l'unité d'interface (112) côté appareil comprenant le deuxième élément thermoélectrique (219) qui est agencé pour, en présence de la connexion de puissance (211), contacter le premier élément thermoélectrique (213) au niveau de la partie de contact de puissance (212) de l'interface d'appareil (102) ; et

- l'unité d'interface (112) côté appareil comprenant la partie de contact de mesure qui est couplée au deuxième élément thermoélectrique (219) et qui est agencée pour former la connexion de mesure (216) avec la partie de contact de mesure de l'interface d'appareil (102).

9. Système selon l'une des revendications 7 à 8, le premier élément thermoélectrique (213) et le deuxième élément thermoélectrique (219) comportant un point de contact (311) direct l'un avec l'autre dans une zone partielle de la connexion de puissance (211) entre les parties de contact de puissance (212, 214).

10. Système selon l'une des revendications 7 à 9,

    - la partie de contact de puissance (212) de l'interface d'appareil (102) comprenant une broche ; et
    - la partie de contact de puissance (214) de l'unité d'interface (112) côté appareil comprenant une douille dans laquelle la broche de l'interface d'appareil (102) peut être enfichée.

11. Système selon l'une des revendications 7 à 10,

    - l'unité d'interface (112) côté appareil comprenant un ressort au niveau duquel est disposé le deuxième élément thermoélectrique (219) ; et/ou
    - le premier élément thermoélectrique (213) étant disposé au niveau d'un côté de la partie de contact de puissance (212) de l'interface d'appareil (102) qui est tourné vers le ressort de l'unité d'interface (112) côté appareil.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015113666 A2
- WO 2006109330 A1
- DE 102015206840 A1